Europäisches Patentamt

European Patent Office

Office européen des brevets

(19)

(11)  EP 0 671 612 B1

(12)  EUROPEAN PATENT SPECIFICATION

(45) Date of publication and mention
of the grant of the patent:
**03.03.1999  Bulletin 1999/09**

(51) Int Cl.⁶: **G01H 11/00**, G01H 11/08,
G01L 23/22

(21) Application number: **94921849.9**

(22) Date of filing: **01.08.1994**

(86) International application number:
**PCT/JP94/01267**

(87) International publication number:
**WO 95/04262 (09.02.1995 Gazette 1995/07)**

(54) **KNOCK SENSOR WITH BEAM ACCELEROMETER**

KLOPFSENSOR MIT BALKENBESCHLEUNIGUNGSMESSER

DETECTEUR DE CLIQUETIS AVEC ACCELEROMETRE A POUTRE

(84) Designated Contracting States:
**DE FR GB IT**

(30) Priority:  **03.08.1993  JP  192219/93**

(43) Date of publication of application:
**13.09.1995   Bulletin 1995/37**

(73) Proprietor: **DENSO CORPORATION**
**Kariya-City, Aichi-Pref. (JP)**

(72) Inventors:
• **IMAI, Masahito**
**Aicha-Pref. 448 (JP)**
• **KANEMARU, Kenji**
**Aichi-Pref. 448 (JP)**
• **KITAO, Norio**
**Aichi-Pref. 448 (JP)**
• **GOTO, Nobuyasu**
**Aichi-Pref. 448 (JP)**
• **MIZUNO, Naohito**
**Aichi-Pref. 448 (JP)**
• **KAMABORA, Koichi**
**Aichi-Pref. 448 (JP)**

(74) Representative:
**Winter, Brandl, Fürniss, Hübner, Röss, Kaiser,**
**Polte, Kindermann Partnerschaft**
**Patent- und Rechtsanwaltskanzlei**
**Patentanwälte, Rechtsanwalt**
**Alois-Steinecker-Strasse 22**
**85354 Freising (DE)**

(56) References cited:
**EP-A- 0 138 023          JP-A-57 163 837**
**JP-A-58 178 225          JP-Y-60 032 588**
**US-A- 4 410 872**

• **PATENT ABSTRACTS OF JAPAN vol. 006 no.**
**175 (P-141) ,9 September 1982 & JP-A-57 093215**
**(SEIKO ELECTRONIC COMPONENTS LTD) 10**
**June 1982,**
• **PATENT ABSTRACTS OF JAPAN vol. 012 no.**
**435 (E-683) ,16 November 1988 & JP-A-63 169078**
**(NIPPON DENSO CO LTD) 13 July 1988,**
• **PATENT ABSTRACTS OF JAPAN vol. 011 no.**
**311 (P-625) ,12 October 1987 & JP-A-62 103526**
**(NIPPON DENSO CO LTD;OTHERS: 01) 14 May**
**1987,**
• **PATENT ABSTRACTS OF JAPAN vol. 007 no.**
**163 (M-229) ,16 July 1958 & JP-A-58 070056**
**(NISSAN JIDOSHA KK) 26 April 1983,**

## Description

TECHNICAL FIELD

The present invention relates to a knock sensor to detect abnormal vibration due to a knocking phenomenon in an engine for a vehicle or the like.

BACKGROUND ART

A knock control system intended to control a knocking phenomenon, increase engine torque, and improve fuel consumption by sensing a knocking phenomenon in an engine of a vehicle or the like, conveying the presence or absence of the knocking phenomenon to an engine control unit (ECU), and controlling the ignition timing of spark plugs within cylinders of the engine with the ECU is known conventionally. This knock sensor senses vibration characteristic to the knocking phenomenon, and the vibration detector thereof has conventionally used a piezoelectric element composed of ceramic.

Broadly speaking, there are two types of detection methods for knock vibration of this knock sensor. One is a resonance type which causes a piezoelectric element to resonate together with a knocking frequency and detects output due to the resonance thereof as a knock signal, as is described in Japanese Patent Application Laid-open No. 62-96823 Patent Gazette, Japanese Patent Application Laid-open No. 59-164921 Patent Gazette, or Japanese Utility Model Application Laid-open No. 62-128332. The other is a flat type which detects a knock signal in a flat region in which an output signal output by a piezoelectric element is not subject to the influence of resonance, as described in Japanese Utility Model Application Laid-open No. 57-99133. Because the former causes resonance with the knock vibration, output with a good signal-to-noise ratio is obtained, but conversely only a unique knock vibration can be detected, and in the case of an engine with many cylinders it is impossible to detect knock vibration of all cylinders at a single location, and the problem exists that a plurality of knock sensors are required. On the other hand, the latter can detect knock vibration of various frequencies, but the possibility exists that, aside from the influence of the resonant frequency of the element itself, the vibration of other components may exert an influence on the vibration detection region, and there exists the problem wherein the degree of freedom in design of the knock sensor itself is narrow.

As the structure of these sensors, a structure disposing a piezoelectric element composed of a vibration detector within a space formed by a housing made of metal (or a housing composed of a strong material to be substituted thereby) having a projection of screw configuration so as to be installed directly on an engine and a of connector molded of resin which allows connector connection with an external portion is common.

Accordingly, there are two types of piezoelectric element installation: a type firmly fixed to the housing side by means of a screw or the like, and a type fixed in a state fixed to a stem of metal which becomes a fixing pedestal (or a strong fixing pedestal to be substituted thereby) on the connector side. Additionally, for the latter there exist, as similar types thereof, a type fixed to the stem, and not fixed directly to the connector side but fixed by means of caulking, and a type wherein the contact point of the step and housing is connected by means of gluing or welding or the like. That is to say, the latter can be termed a type fixed to the stem and disposed within a spaced formed by the stem and housing.

In a case where the piezoelectric element is fixed to the housing side, resonant frequency is high because the housing itself is made of metal, the housing itself does not resonate due to engine vibration, and influence thereof is not exerted on the piezoelectric element. However, it is necessary to perform the electrical connection from the piezoelectric element to the connector terminal by means of for example lead wires, the connector and housing must be fixed by means of caulking or the like to fix the piezoelectric element to the housing and connect the lead wires, and there exists the problem of a difficult fabrication process.

On the other hand, in a case of fixing to the connector side, because electrical connection from the piezoelectric elements to the connector terminal can be performed at the connector side, it is sufficient to fix a connector whereon a piezoelectric element is fixed to the housing by means of caulking or the like, and the fabrication process becomes simple. However, because the connector is generally made of resin, the resonant frequency is low, and in a case whereby the piezoelectric element is connected to the connector with nothing, resonance of the connector is conveyed without being attenuated by the piezoelectric element, and there exists a problem of influence being exerted on signal detection. To prevent this, mounting on a stem made of metal (or a strong material the Young's modulus of which is not less than metal) so as to impede vibration conveyance of the connector is required.

In this case, with a piezoelectric element of resonant type the detection signal is the resonance output of the piezoelectric element, and so there is no influence if output due to resonance of the connector or the like is to a certain extent smaller than that due to resonance of the piezoelectric element, but with a piezoelectric element of flat type, in a case whereby frequency thereof is a flat region, the signal-to-noise ratio may be caused to decline greatly, and so vibration from the connector must reliably be impeded by making the thickness of the stem thicker. This can be said to be the same also for the type connecting the contact point of the stem and housing by means of gluing or welding or the like. That is to say, with partial welding or the like adequate suppression of resonance of connector vibration cannot be performed.

Accordingly, this problem is subjected to the most influence by the weight of the piezoelectric element itself, and in a case of identical stem thickness, if the weight thereof becomes heavier the resonant frequency of the stem declines, and the influence thereof appears even more strongly. For this reason, it is necessary to cause the weight of the piezoelectric element to be reduced, but if this is done a problem of a drop in sensitivity appeared. Consequently, in order to avoid the influence of a decline in resonant frequency while maintaining sensitivity, the detection frequency region which assumes flat characteristics becomes a maximum of approximately 10 kHz, and the problem exists wherein detection up to a high-frequency region is not possible.

Accordingly, in view of this problem it is an object of the present idea to provide a knock sensor having a vibration detector of flat type capable of detecting a plurality of knock signals and fixed on a fixing pedestal as well as disposing the vibration detector within a space formed by the fixing pedestal and a housing, having a simple fabrication process and moreover capable of detection up to a high-frequency region without causing required sensitivity to decline.

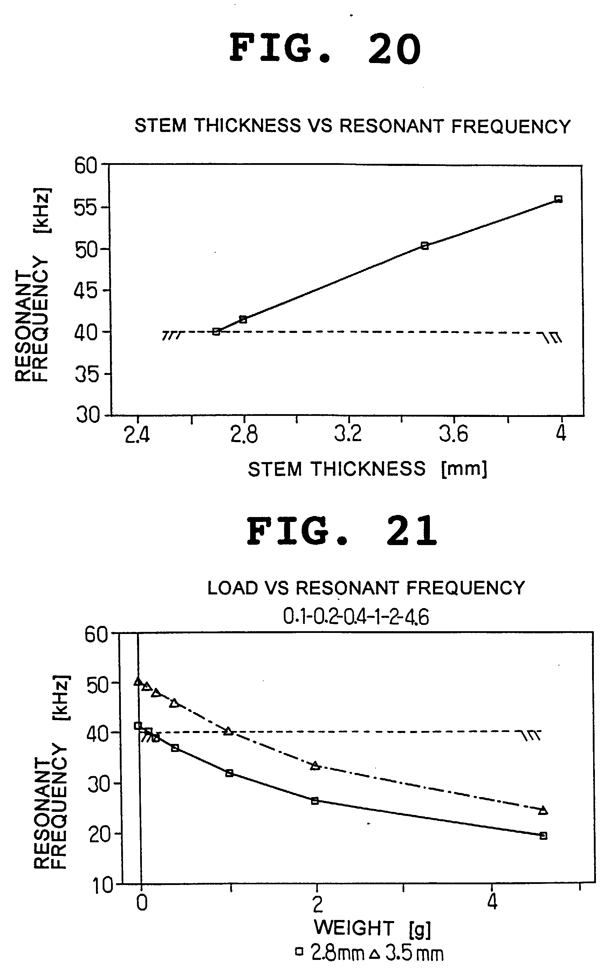

The present inventors firstly made verification regarding the vibration detector. As a result of investigation by the present inventors, it was understood that in a case whereby the detection region of the knock signal is taken to be a maximum of approximately 15 kHz, the resonant frequency of a stem (made of metal) which does not overly influence this detection region becomes a minimum of approximately 40 kHz. When a stem thickness whereby resonant frequency becomes 40 kHz was investigated, it was understood that roughly 2.7 mm was required, as shown in FIG. 20. This is a simulation performed by means of the model indicated in FIG. 22, and this stem 30 takes the diameter thereof to be 19 mm, a region combining the vibration detector and other circuitry thereof is taken to be a load region 31, and the diameter of the surface on which the load region 31 is mounted is taken to be 16.5 mm. Additionally, this stem 30 has a step, and a weld portion M welded to a housing not illustrated is formed on the step surface thereof so as to approach actual stem configuration. As can be understood from this drawing as well, if stem thickness D is caused to change without changing the diameter, it is understood that the resonant frequency of the stem rises. This can be understood if it is considered that, wherein the weld portion M is fixed, there exists an image whereby a solid configuration is more difficult to vibrate than a plate configuration.

Additionally, FIG. 21 indicates change in resonant frequency of the stem in cases whereby stem thickness are taken to be 2.8 mm and 3.5 mm and further in a case whereby the load mounted on these stems is caused to change. FIG. 21 is data in a case whereby the load region 31 is caused to change from 0.1 g to 4.6 g. It is understood from this drawing that resonant frequency declines in a case whereby a load is applied to the stem. Consequently, even in a case whereby a load is applied increased thickness is required in order to maintain the resonant frequency at approximately 40 kHz. In a case whereby for example the load is taken to be 4.6 g, in order to make the resonant frequency of the stem to be 40 kHz, when in FIG. 21 the stem thickness is 2.8 mm the resonant frequency thereof is 20 kHz, and consequently it is necessary to double the resonant frequency. Accordingly, if in FIG. 20 the resonant frequency and stem thickness are taken to be in a linear relationship, a stem thickness of 4.4 mm becomes necessary.

In actuality, the weight of a piezoelectric element is approximately 20 g, and in order to cause the resonant frequency of a stem mounted with this piezoelectric element to be 40 kHz, if resonant frequency becomes 10 kHz when hypothetically the stem thickness is 2.8 mm in a case whereby load is taken to be 20 g, the stem thickness must be increased by 3 mm even at a low estimate to approximately 5.8 mm.

Consequently, there is not only enlargement as a knock sensor, but in a case whereby a through-hole for the purpose of passing a pin to connect to the connector terminal is made in the stem by punching or cutting, when the strength of the punch pin or cutting drill is considered, it is necessary to make the diameter thereof to be approximately identical to the stem thickness, and it is necessary to form a considerably large through-hole on the stem. In a case of the foregoing stem, if a vibration detector of a piezoelectric element or the like is taken to be mounted on the surface on which load is applied, it is necessary to make a 5.8 mm through-hole on a surface with a diameter of 16.5 mm, and the mounting region of the element is constrained. Consequently, if mounting of signal processing circuitry other than the piezoelectric element is to be attempted, the diameter of the stem must be enlarged. However, enlargement of the diameter of the stem signifies a decline in resonant frequency even if thickness is the same, and stem thickness must be increased further in order to maintain the resonant frequency at the same value. If this occurs, the size of the through-hole must also be enlarged proportionately to the stem thickness as described above, repeating a vicious cycle and generating a failure in which design values are not obtained. Consequently, in a case whereby a piezoelectric element is employed in a vibration detector thereof, the limit for the maximum detection frequency that can be obtained is 10 kHz. In addition, even hypothetically if designed with a large through-hole, the process becomes complex because of the device needed to make the through-hole.

Consequently, in order to enable detection up to high frequencies, it is necessary to use an article lighter than a piezoelectric element. As shown in FIG. 21, even when stem thickness is approximately 3.5 mm, a load allowing the resonant frequency of the stem to be established at 40 kHz is roughly 1 g. If stem thickness is approximately 3.5 mm, formation of a through-hole also becomes possible without major change.

Additionally, even if the fixing pedestal is not a metal stem, ultimately the resonant frequency resonant frequency of the fixing pedestal will undoubtedly decline and exert an influence on vibration detection.

Accordingly, the present inventors gave attention to a semiconductor acceleration sensor formed on a semiconductor substrate used in an airbag and the like as allowing the vibration detector to be made to be 1 g or less. This is structured from a weight (mass), a beam supporting this weight (mass), and a frame to which the beam is fixed by means of etching or the like on for example a semiconductor silicon substrate. The weight (mass) vibrates by means of vibration of an external portion, and vibration is detected by sensing stress generated in the beam by means of vibration thereof; the inventor as well has shipped multiple examples to market. Accordingly, a vibration detector according to this semiconductor is extremely compact with good sensitivity, and thickness thereof can adequately be made to be 1 g or less.

DISCLOSURE OF THE INVENTION

Consequently, a knock sensor according to the present invention is given with claim 1.

According to the claimed structure, in the present invention a sensing element formed on a semiconductor substrate is taken as a vibration detector, and so the weight thereof can be reduced to an extreme degree. Consequently, as a knock sensor disposing the vibration detector within a space formed by the fixing pedestal and the housing, a knock sensor capable of detection up to a high-frequency region without causing required sensitivity to decline and moreover capable of detecting a plurality of knock signals can be provided.

BRIEF DESCRIPTION OF THE DRAWINGS

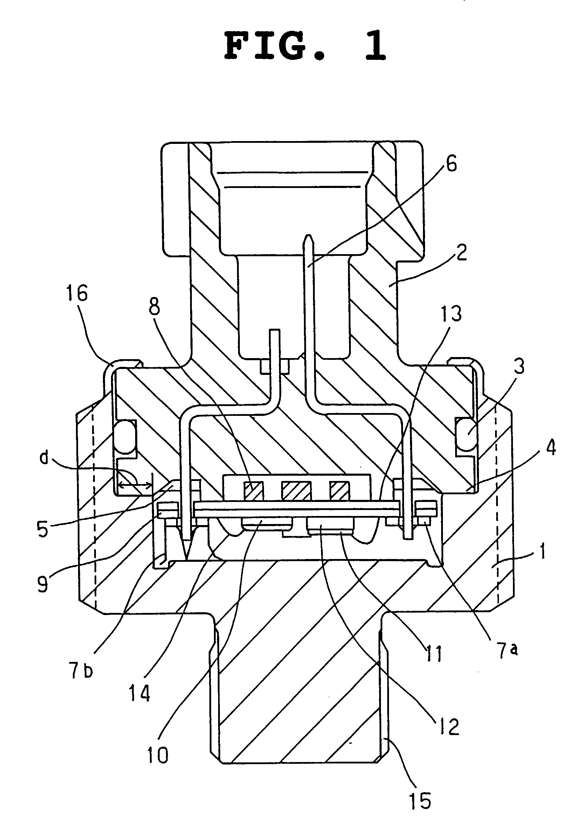

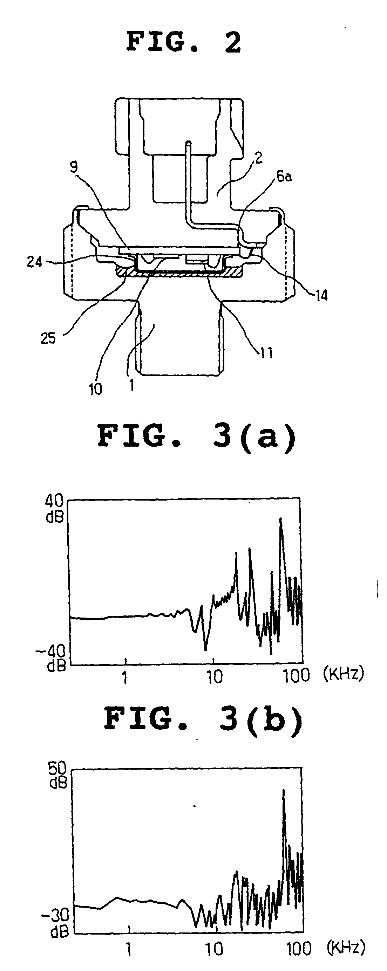

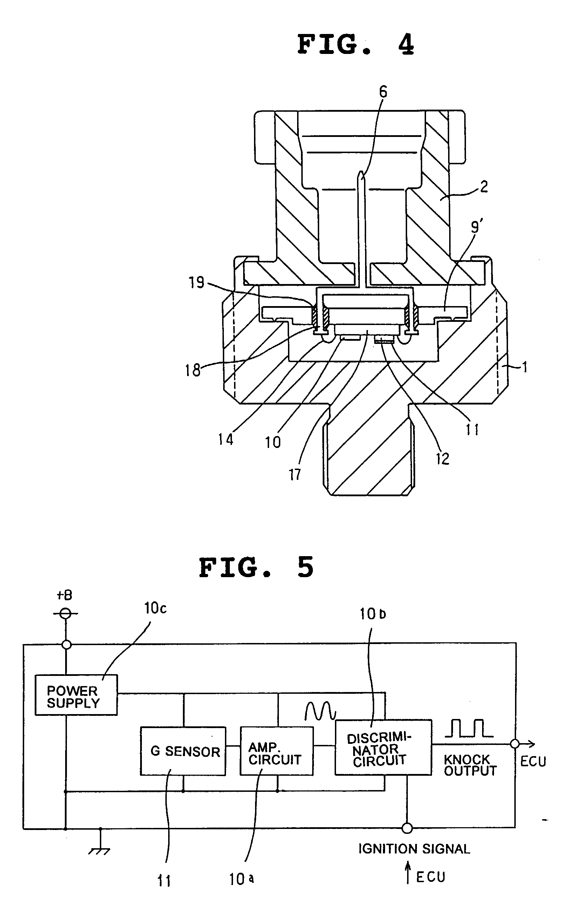

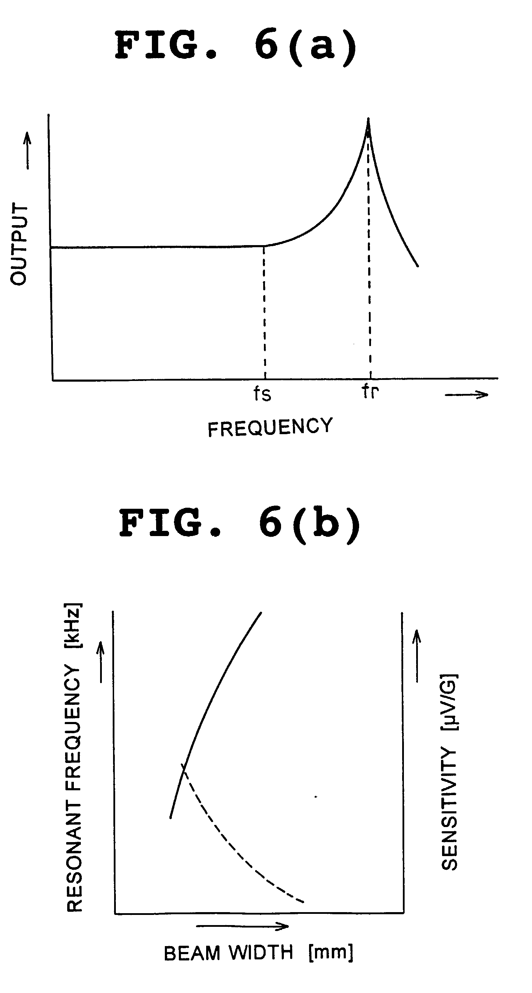

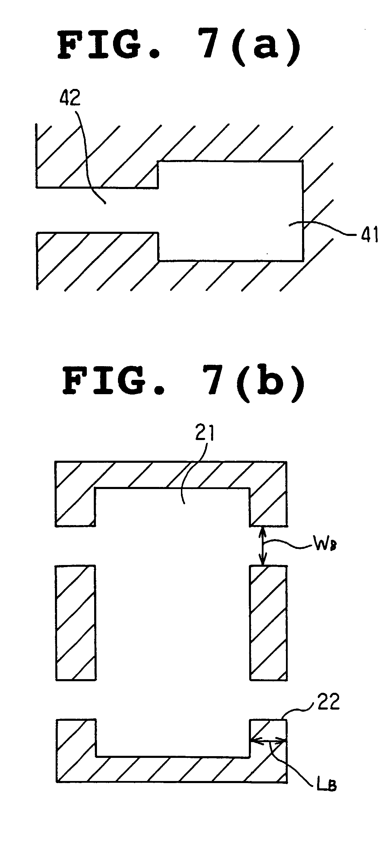

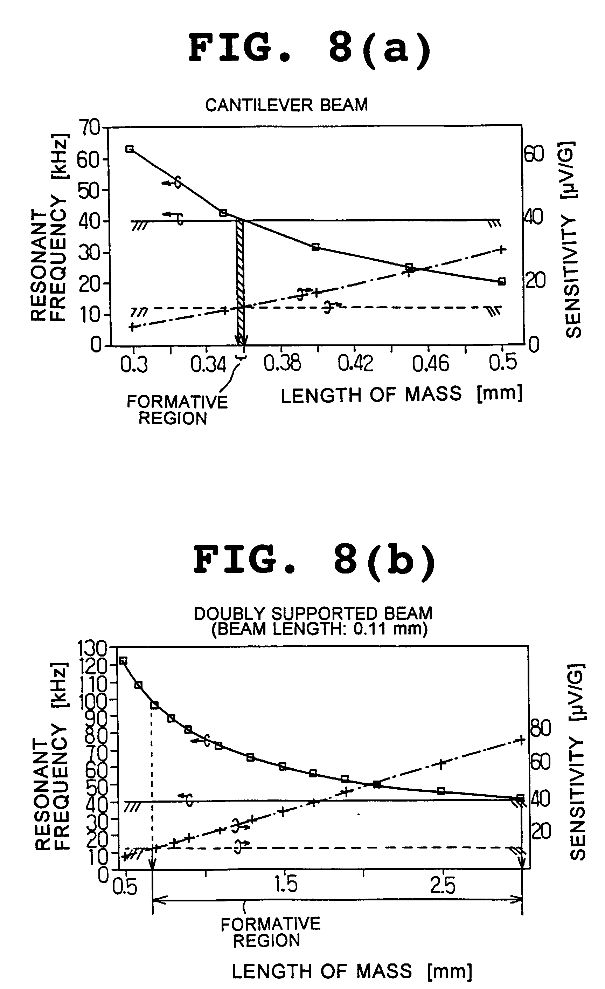

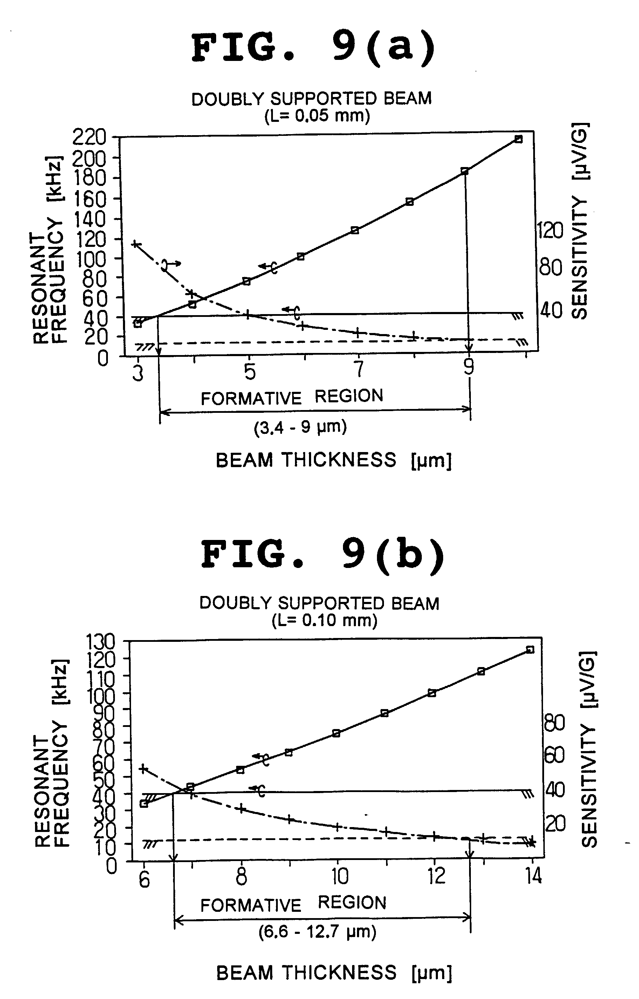

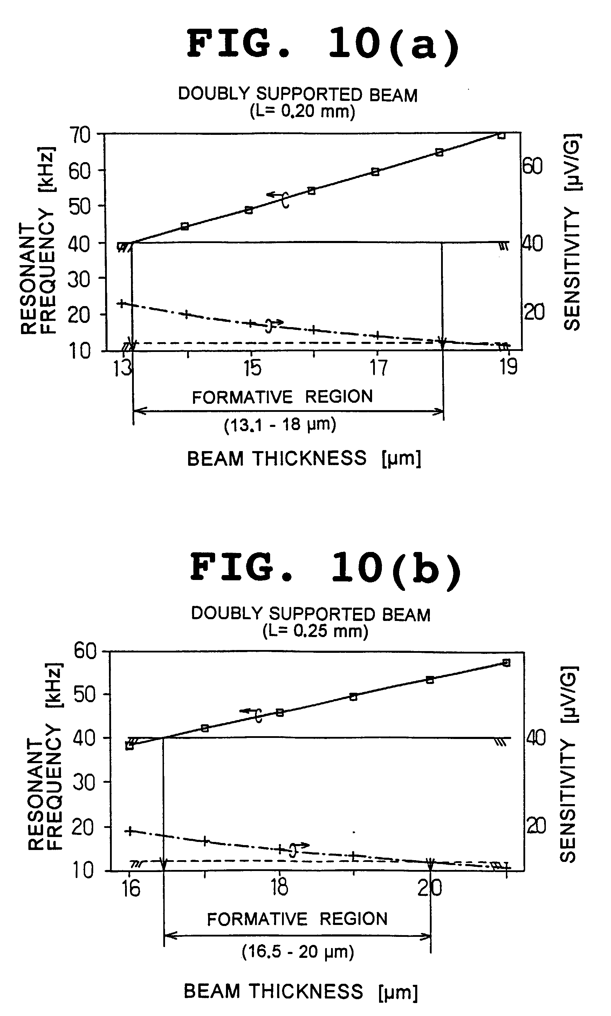

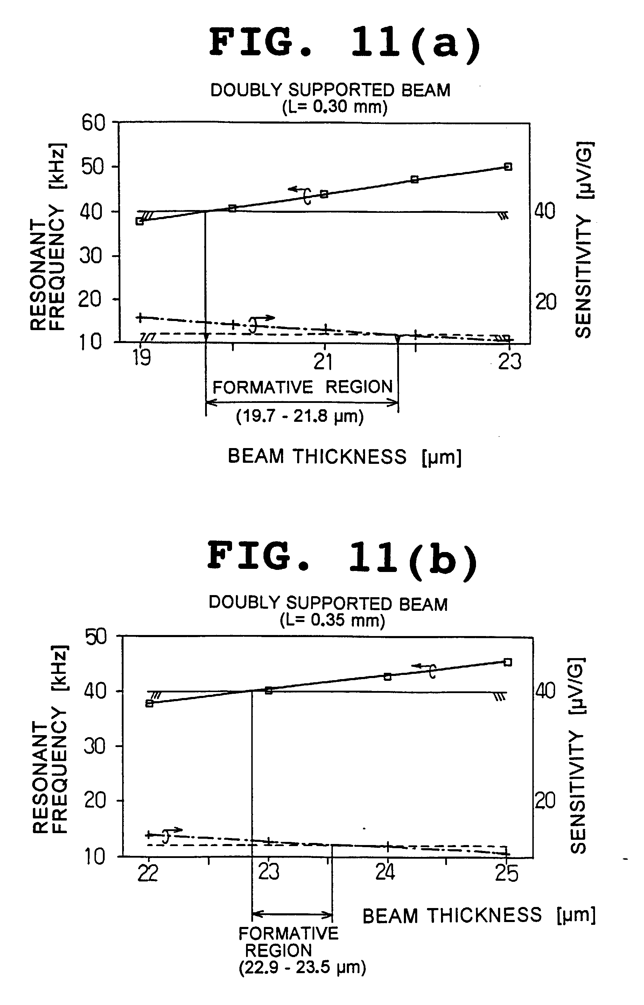

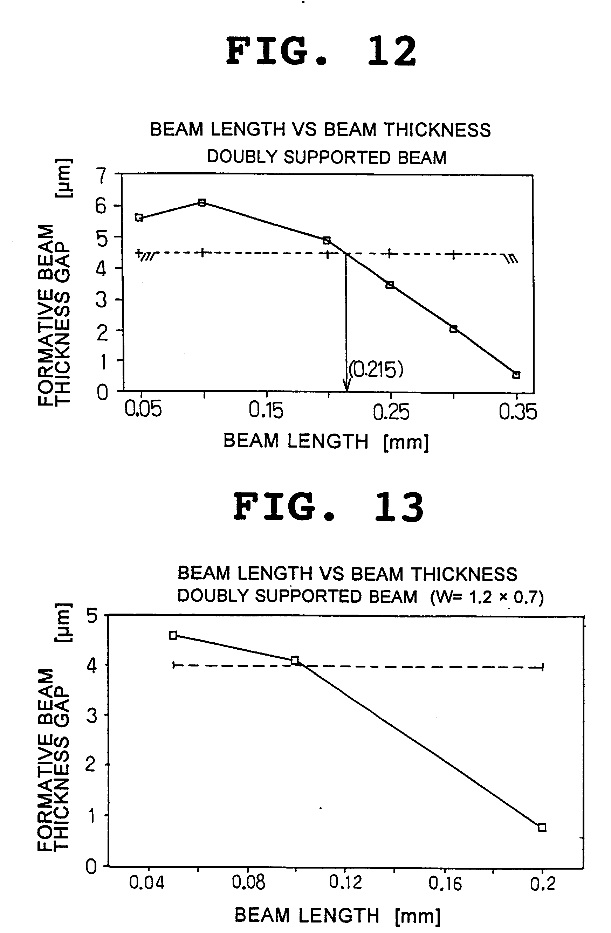

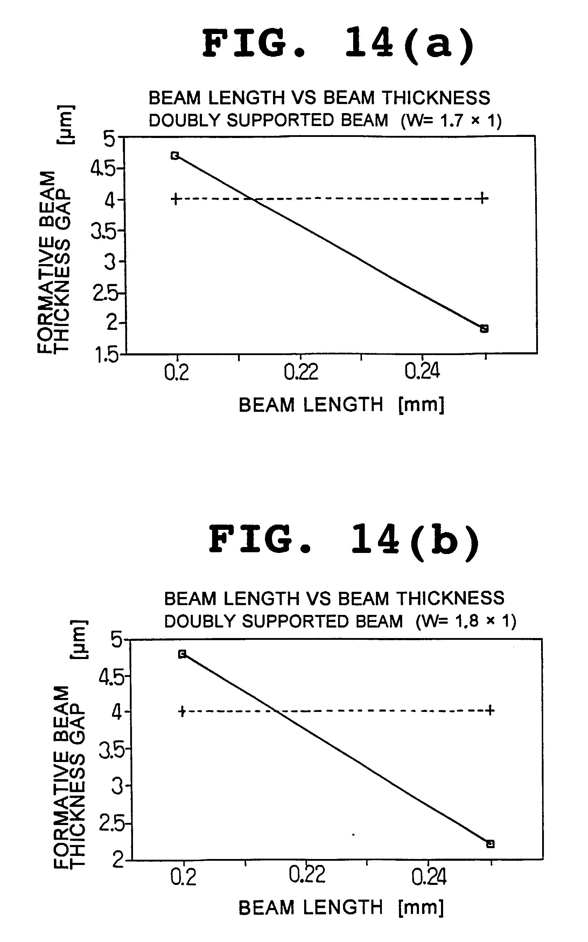

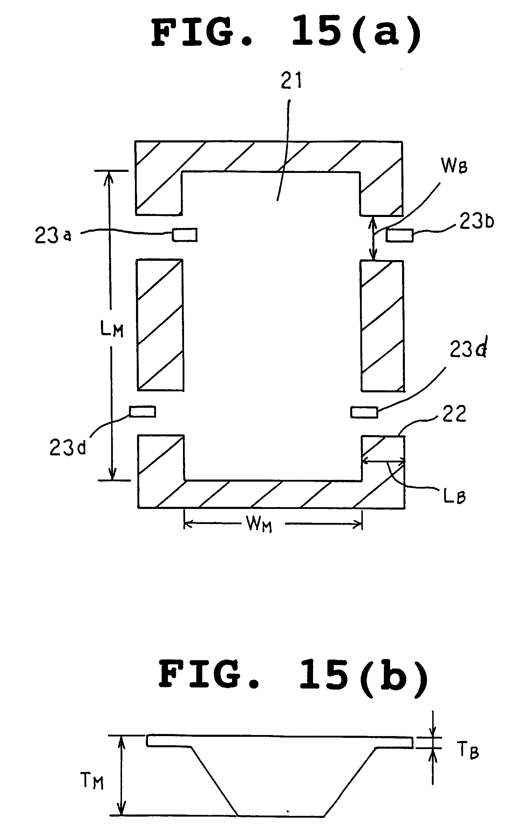

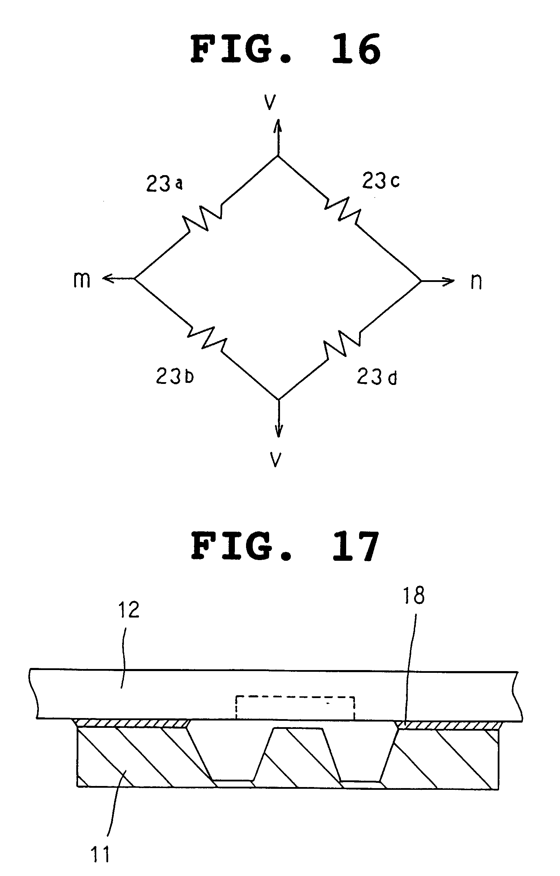

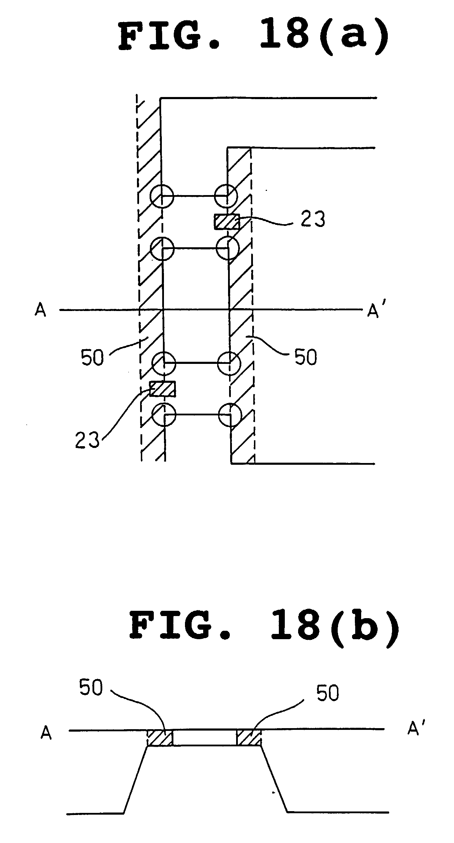

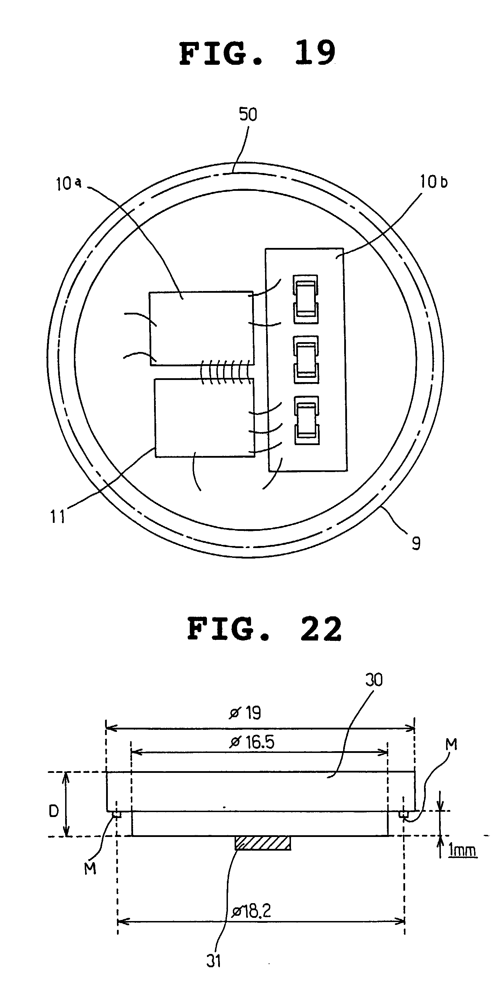

FIG. 1 is a sectional view of a knock sensor showing a first embodiment. FIG. 2 is a sectional view of a knock sensor showing a second embodiment. FIGS. 3(a) and 3(b) are characteristic diagrams for the purpose of indicating effects of the second embodiment. FIG. 4 is a sectional view of a knock sensor showing a third embodiment. FIG. 5 is a block diagram indicating a signal processing circuit. FIG. 6(a) is a graph showing frequency characteristics of a knock sensor. FIG. 6(b) is a graph showing a relationship between beam width, resonant frequency, and sensitivity. FIG. 7(a) is a view indicating a vibration detector of cantilever supported beam structure. FIG. 7(b) is a view indicating a vibration detector of doubly supported beam structure. FIG. 8(a) is a graph showing a relationship between sensitivity and resonant frequency of a vibration detector due to length of a weight (mass) of cantilever beam structure. FIG. 8(b) is a graph showing a relationship between sensitivity and resonant frequency of a vibration detector due to length of a weight (mass) of doubly supported beam structure. FIG. 9(a), FIG. 9(b), FIG. 10(a), FIG. 10(b), FIG. 11(a), and FIG. 11(b) are graphs each showing a relationship between beam thickness, resonant frequency, and sensitivity in a case whereby respective beam lengths are fixed at certain values in a vibration detector of doubly supported beam structure, wherein: FIG. 9(a) is when beam length is taken to be 0.05 mm; FIG. 9(b) is when beam length is taken to be 0.10 mm; FIG. 10(a) is when beam length is taken to be 0.20 mm; FIG. 10(b) is when beam length is taken to be 0.25 mm; FIG. 11(a) is when beam length is taken to be 0.30 mm; and FIG. 11(b) is when beam length is taken to be 0.35 mm. FIG. 12 is a graph showing a formative region of beam width and beam thickness. FIG. 13 is a graph showing a formative region of beam width and beam thickness in a case whereby resonant frequency in FIG. 12 is taken to be 60 kHz. FIG. 14(a) and FIG. 14(b) are graphs each showing a formative region of beam width and beam thickness in a case whereby a weight (mass) has been enlarged. FIG. 15(a) is a structural plane view of a sensing element employed in the foregoing embodiment. FIG. 15(b) is a sectional view of FIG. 15(a). FIG. 16 is a Wheatstone bridge circuit diagram. FIG. 17 is a sectional view indicating a sensing element in a state fixed on a substrate. FIG. 18(a) is an enlarged view indicating a portion of a sensing element. FIG. 18(b) is a sectional view of FIG. 18(a). FIG. 19 is a view showing a state mounted with an element fixed on a fixing pedestal. FIG. 20 is a graph showing a relationship between stem thickness and resonant frequency. FIG. 21 is a graph showing a relationship between load region and resonant frequency. FIG. 22 is a view showing a model obtaining the characteristic diagrams of FIG. 20 and FIG. 21.

BEST MODE FOR CARRYING OUT THE INVENTION

FIG. 1 is a sectional view of a knock sensor. A substrate 9 is glued to a connector 2 formed integrally with a terminal 6 by means of adhesive 13. A fixing pedestal 9 is composed of a ceramic substrate which is stronger than metal, and a capacitor (layer capacitor) and filter 8 forming an EMI filter are built-in or surface-mounted within this. Additionally, a sensing element 11 composed of a semiconductor which will be described below and a signal processor 10 composed of a power supply circuit, amplifier circuit, and knock signal discriminator circuit are glued to the fixing pedestal 9, with electrical conductance between elements or with an external portion provided by a wire 14. In addition, the fixing pedestal 9 and connector 2 are electrically bonded by means of a socket 7 established on the fixing pedestal 9. Accordingly, a housing 1 composed of metal is fixed to the connector 2 by means of caulking 16 and adhesive 14 so as to cover the fixing pedestal 9. Additionally, the fixing pedestal 9 is sealed airtightly by means of an O-ring 3 and adhesive 5. This knock sensor is fixed to an engine for detection of knocking phenomenon by means of a screw 15 of the housing 1.

In order to enable the combined weight of the sensing element 11 to be described below and signal processor circuit and the like to be made to be approximately 0.1 g, a knock sensor structured in the foregoing manner can maintain the resonant frequency of the substrate at approximately 40 kHz even when connected to the connector side via the fixing pedestal 9. Consequently, even if the sensing element is installed on the connector side via the fixing pedestal, a sensor capable of detecting up to a high-frequency region of approximately 15 kHz or more can be provided. Additionally, in comparison with a case whereby a sensing element is installed on the housing side, according to the present structure the fixing pedestal substrate on which the sensing element is priorly mounted can be installed on the connector side, and so the fabrication process is simplified and connection of the connector terminal and substrate connected done easily and reliably.

However, in a knock sensor according to the present embodiment, the maximum frequency to detect is roughly 15 kHz or more which is high, and if the resonant frequency of the connector is considered, there exists limitations in structure which satisfy performance. According to the present structure, compactness and light weight of the mounted device are attempted by employing a sensing element composed of a semiconductor for the vibration detector instead of employing a conventional piezoelectric element, and along with this, the foregoing structure was achieved by optimizing the composition and configuration of the connector as well as Young's modulus of the adhesive fixing the connector and housing. This optimization was analyzed by means of FEM. As a result of this, the Young's modulus of the composition of the connector was 1,000 $kgf/mm^2$ to 2,000 $kgf/mm^2$, the adhesive portion connector thickness d indicated in FIG. 1 was 1 to 3 mm, and the adhesive Young's modulus was 10 to 2,000 $kgf/mm^2$, by means of which the present structure was established.

Next, FIG. 2 indicates a modification of the first embodiment as a second embodiment. This is fixed to the connector 2 by means of adhesive or the like on the entirety of the rear surface of the fixing pedestal 9. Accordingly, a connector terminal 6a is connected to the sensing element 11 or a signal processing circuit 10 or the like by means of a wire bond 14. The signal processing circuit 11 and sensing element 10 according to the present embodiment are sealed by means of a can 24 and simultaneously the can 24 is caused to contact silicone gel 25 injection-hardened within the housing 1. By doing this, vibration of the connector 2 conveyed via the fixing pedestal 9 can be absorbed by the silicone gel 25 via the can 24, and resonance of the fixing pedestal 9 can be suppressed. Consequently, resonance of the connector is not conveyed directly to the sensing element. Accordingly, the degree of design freedom of the vibration countermeasures thereof is increased in comparison with the first embodiment.

Vibration suppression of the fixing pedestal 9 by means of the silicone gel 25 is indicated in FIGS. 3 (a) and 3(b). FIG. 3(a) shows a state with no silicone gel, and FIG. 3(b) shows a state with silicone gel. In the fixing pedestal 9 of the sensor with no silicone gel there is considerable fabrication at the frequency bands of 20 kHz, 30 kHz, and 50 kHz, but it is understood that in the fixing pedestal 9 of the sensor with silicone gel, vibration is suppressed at the foregoing singularity points. Moreover, the material to absorb vibration is not exclusively silicone gel in particular. Additionally, it is also acceptable for the terminal 6a to be a structure penetrating the fixing pedestal 9.

Next, as a third embodiment, FIG. 4 indicates a device employing hermetic seal technology as a method to seal a sensing element composed of a semiconductor.

In this case, a sensing element 11 and signal processor 10 are fixed via a substrate 17 to a metal stem 9', which becomes a fixing pedestal, and moreover are fixed by welding to a housing 1. The structure of the metal stem 9' at this time has a thickness of 2.8 mm and a diameter of 19 mm, as shown in FIG. 21, and the diameter of the surface whereon the sensing element and so on are mounted is 16.5 mm, and the diameter of the through-hole passed through by an extraction pin 18 is approximately 2.8 mm. According to this embodiment, the sensing element 11 and signal processor 10 are mounted on the metal stem 9' via the substrate 17, but the overall weight of the mounted components becomes roughly 0.3 g. Additionally, as will be described later it is acceptable for this substrate 17 to be absent as shown in FIG. 19.

In this manner, according to the present embodiment a vibration detector composed of a semiconductor is employed as the sensing element, similarly to the first embodiment, and so sensitivity is favorable with compactness, the weight thereof can be made to be an extremely light approximately 0.3 g, and even when mounted on a thin metal stem in the above-described manner, the resonant frequency of the metal stem can be caused to be 40 kHz with substantially no decline. Additionally, the thickness of the metal stem is approximately 2.8 mm, and the through-hole through which the extraction pin passes becomes easily formable. Consequently, a knock sensor of a structure whereby the fabrication process is simplified, and furthermore which can detect up to high-frequency regions with no drop in sensitivity, can be provided.

Additionally, in comparison with the structure of the first embodiment there is no particular need to perform vibration countermeasures in the composition of the connector or the like. By means of this, the selection range is further expanded for the composition of the connector 2 and the composition of the adhesive. In addition, the sensing element 11 and signal processor 10 are reliably sealed airtightly by means of projection welding and glass sealing of the extraction pin 18.

Moreover, the foregoing third embodiment adopts an airtight-seal structure which employs hermetic seal technology to fix the extraction pin, but it is also acceptable for example to fix the extraction pin by means of filler-containing adhesive or the like instead of hermetic seal glass material, so as to seal airtightly. Alternatively, it is also acceptable to adopt an airtightly sealed structure whereby a member other than glass is inserted into the through-hole.

Furthermore, according to the foregoing first through third embodiments, by means of achieving compactness of the sensing portion to detect vibration, it becomes possible to dispose an amplifier circuit to amplify the output signal of the sensing element and a discriminator circuit to process the amplified signal and output a knock signal to an external portion on the same substrate without enlarging the diameter of the ceramic substrate which becomes the fixing pedestal or of the metal stem. Effects which this yields will be described hereinafter.

Firstly, FIG. 5 indicates a block diagram of a vibration detection circuit of the present structure. A signal detected by means of the sensing element 11 is amplified by an amplifier circuit 10a, synchronized to an ignition signal from an engine ECU and determined to be a knocking phenomenon such as knock signal discriminator circuit 10b, and output to the ECU. Further, 10c is a power supply circuit formed on the same substrate as the amplifier circuit 10a and knock signal discriminator circuit 10b, and supplies electrical power from the battery of the vehicle or the like to the respective circuits. A constant voltage of for example 5 V is caused to be generated as the voltage thereof. Consequently, in a case whereby voltage of the battery is taken to be 12 V, the difference thereof is 7 V, and a stable voltage can be provided to the respective circuits even if battery voltage fluctuates due to noise or the like.

Moreover, as is shown in this drawing, a signal amplified by the amplifier circuit 10a is analog output, but a signal discriminated by the knock signal discriminator circuit is connected to the ECU as digital output. Consequently, a structure which is strong with respect to noise can be achieved as the knock sensor.

By means of this, in a case whereby for example a ground (GND) is taken from the engine (chassis), with respect to when GND potential is subjected to influence from another circuit and fluctuates during analog output and the fluctuation thereof is overlaid on the analog output and is erroneously processed at the next stage of signal processing, with digital output, even if fluctuation in GND potential is overlaid on output, discrimination is made at 1/2 of the rising-edge height in the next stage of signal processing, and so if the noise is not considerable, the influence of the noise is nor received. Consequently, it becomes possible actually to take the GND from the engine via a socket 7b and the housing, as shown in for example FIG. 1. By means of this, wiring for GND use becomes unnecessary, and reliability is improved, and along with this the need to provide a connector terminal for GND use is eliminated and the connector can be made smaller.

In this manner, a structure with a small and light sensing element is possible and so it becomes possible to mount other circuit elements on the fixing pedestal, by means of which a sensor which is strong with respect to fluctuations of the battery and GND potential fluctuations can be provided.

Next, a sensing element composed of a semiconductor element employed in the present embodiment will be described hereinafter.

The present inventors firstly investigated the frequency range wherein the resonant frequency of the sensing element should be established. Here, as shown in FIG. 6(a), in a case whereby the maximum detection frequency was taken to be fs and the resonant frequency was taken to be fr, the resonant frequency fr must be established so that the resonant frequency is not affected, such that the detection region assumes flat characteristics. However, in detecting vibration due to an engine knocking phenomenon, the problem arises as to whether the sensing element composed of a semiconductor which is employed in a semiconductor acceleration sensor can satisfy the basic characteristics of the sensing portion such as sensitivity, resonant frequency, and fracture strength. The weight (mass) configuration and beam configuration, particularly the beam thickness and beam width, are in a close relationship with resonant frequency and sensitivity, and if beam thickness and beam width are caused to be changed, resonant frequency and sensitivity change greatly. If beam width is taken as an example, resonant frequency is proportional to the square root of beam width, and sensitivity is inversely proportional to beam width. That is to say, beam width and resonant frequency can be said to be in a mutually contradictory relationship with beam width and sensitivity. This is indicated respectively by the solid line and the broken line in FIG. 6(b). Consequently, the problem arose as to whether a structure exists which adequately satisfies the basic characteristics of sensitivity and resonant frequency.

In order to obtain stabilized output, the present inventors firstly needed to establish resonant frequency so that sensor output yielded flat characteristics even at maximum detection frequency. As is understood from examination of FIG. 6(a), output increases in the manner of an exponential function from the flat region to the peak of resonant frequency. Consequently, resonant frequency must be established so that the rising edge of the output due to the peak of resonant frequency does not overlap with the maximum detection frequency, such that fluctuation in output at the maximum detection frequency becomes a sufficiently small value. However, this rising edge of the output is extremely difficult to determine by means of theoretical analysis, and does not become clear until an element is actually floorboard and measured. In this manner, it is not easy to design a semiconductor acceleration sensor which becomes a vibration detector of a knock sensor.

Accordingly, the present inventors took and tabulated data from a conventional acceleration sensor, and as a result, sought out a relationship of resonant frequency fr and maximum detection frequency fs wherein the response frequency region of sensor output is constantly flat as will be shown below.

$$f_r \geq A \cdot f_s \ (2.5 \leq A \leq 4)$$

However, A is a constant determined by means of the support method of the weight (mass). Accordingly, by means of discovering this relationship, it was determined that a knock sensor which can satisfy basic characteristics of vibration detection of sensitivity, resonant frequency, and fracture strength is realizable even when a semiconductor acceleration sensor is employed as a vibration detector thereof.

Accordingly, it is understood that if maximum detection frequency is taken to be 15 kHz, it is acceptable if approximately 40 kHz or more.

Next, sensor structure was investigated. As shown in FIG. 6(b), resonant frequency and sensitivity are in a tradeoff relationship in for example beam width, and a sensor structure which simultaneously satisfies the required resonant frequency and sensitivity was investigated. The present inventors investigated the structure indicated in FIGS. 7(a) and 7(b). In the device indicated in FIG. 7 (a), a weight (mass) 41 is supported by means of a beam 42. Additionally, FIG. 7(b) indicates a structure wherein a weight (mass) 21 is supported by means of four beams 22. The slanted-line areas in the drawings are portions removed by means of etching. Hereinafter, the device indicated in FIG. 7(a) will be taken to be a cantilever beam structure and the device indicated in FIG. 7(a) will be taken to be a doubly supported beam structure.

FIGS. 8(a) and 8(b) indicate investigation into whether design solutions taking resonant frequency to be 40 kHz or more and sensitivity to be 12 µV/G or more actually exist for the foregoing cantilever beam structure and doubly supported beam structure. Herein, the horizontal axis is taken to be the length of the weight (mass) 41 or 21, the vertical axis of the left-hand side is taken to be resonant frequency, the vertical axis of the right-hand side is taken to be sensitivity, resonant frequency is indicated by means of a solid line, and sensitivity is indicated by means of a dotted line. According to these two drawings, a design solution for cantilever beam structure exists only in the extremely narrow range wherein the length of the weight (mass) for the purpose of satisfying the above-described conditions is approximately 0.35 to 0.36 mm, and in process it is virtually impossible to align the weight (mass) with this range with good planned yield. In contrast to this, it was understood that with a device of doubly supported beam structure, the length of weight (mass) is approximately 0.6 to 2.7 mm, which is a fabricatable range with sufficiently good planned yield. Consequently, a doubly supported beam structure is fabricatable with good planned yield as a structure which simultaneously satisfies both sensitivity and strength.

Additionally, the length and thickness of the beam were investigated next.

Herein, for the beam width WB indicated in FIG. 7(b), the minimum value becomes essentially 0.13 mm due to the piezoelectric element resistance element formed within the width thereof. Consequently, in a case whereby compactness of the element is attempted, determination is according to the size of the weight (mass) or the length of the beam. For the weight (mass), the surface area of the top surface indicated in FIG. 7(b) becomes roughly 0.9 mm² of 1.2 x 0.7 due to the machining precision thereof. Additionally, the thickness of the weight (mass) is dependent on the thickness of the machined wafer, and becomes substantially 0.3 mm in the present sample. Consequently, investigation into the length of the beam LB indicated in FIG. 7(b) becomes a critical point in terms of compactness.

In FIGS. 9(a) and 9(b), FIGS. 10(a) and 10(b), and FIGS. 11(a) and 11(b), the formative region of beam width wherein resonant frequency and sensitivity satisfy conditions similar to the foregoing when the length of the beam LB is caused to be varied as a parameter from 0.05 to 0.35 mm was investigated. As a result of this, as shown in FIG. 12, the formative beam thickness interval and beam length obtained on the basis of the above-described conditions are indicated. Herein, because beam thickness is formed by means of wet etching employing an etching liquid, it is extremely difficult to perform etching with precision on the micron order, and there is fluctuation of roughly 4 µm. Consequently, a region from which this 4 µm is subtracted becomes a region wherein beams can be formed with good planned yield. If this is determined according to FIG. 12, beam length becomes 0.05 to 0.215 mm. The lower limit of 0.05 mm indicates the machining limit.

Herein, if for the vibration detector the maximum detection frequency is taken to be 15 kHz, approximately 40 kHz or more is acceptable, and it is sufficient to design according, as was described above, but because the sensing element is a semiconductor and has high crystallinity, Q value during resonance is extremely high. Therefore, if resonance of the fixing pedestal and sensing element become identical, the sensing element causes large vibration when the vibration component of this is added, and the there is possibility of a drop in the signal-to-noise ratio or even destruction. Accordingly, in order to avoid this, the relationship between the formative beam thickness interval described above and beam length was investigated, taking the resonant frequency of the sensing element to be 60 kHz or more. The results of this are indicated in FIG. 13. In a case such as this whereby resonant frequency is taken to be 60 kHz or more and sensitivity is taken to be 12 μV/G or more, the beam length region wherein the formative beam thickness exists becomes approximately 0.05 to 0.1 mm.

Additionally, the basis of conditions similar to FIG. 13 was determined for a device wherein the size of the weight (mass) is substantially doubled together with taking the resonant frequency to be 60 kHz in consideration of the signal-to-noise ratio and strength as described above. This is data obtained employing the weight (mass) in FIG. 14(a) which is 2.02 times larger than the device for which data was obtained in FIG. 13 and a weight (mass) in FIG. 14(a) which is 2.14 times larger than the device for which data was obtained in FIG. 13. This is a device for which the upper-limit value was investigated, and it is understood from this drawing that the upper-limit value for length of the beam becomes 0.215 mm.

Consequently, in a doubly supported beam structure in a case whereby reduction of the surface area of the weight (mass) and compactness are attempted and moreover consideration is given to minimum conditions (i.e., resonant frequency of 40 kHz or more and sensitivity of 12 μV/G or more) as a knock sensor, in a case even of large size whereby resonant frequency is taken to be 60 kHz or more and the signal-to-noise ratio and strength are considered, beam length becomes 0.05 to 0.215 mm. Furthermore, in a case where size is made compact and the signal-to-noise ratio and strength are considered, a favorable beam length of approximately 0.05 to 0.1 mm is yielded.

Additionally, the considerations which will be described hereinafter are made for a doubly supported beam structure such as that described above.

That is to say, several resonance points exist, not one; primary resonance whereby the weight (mass) resonates perpendicularly and secondary resonance whereby the weight (mass) resonates so as to be twisted are in particular large; when the primary resonant frequency and the secondary resonant frequency are proximate the weight (mass) vibrates complexly, and the beam is destroyed. Consequently, if beam strength is considered, it is demanded that the primary resonant frequency and the secondary resonant frequency be separated.

From the foregoing, a structure was adopted wherein a weight (mass) 21 of oblong configuration is supported by means of four beams 22 as shown in FIGS. 15(a) and 15(b). According to this structure, generation of torsion is difficult, and so the primary resonant frequency and the secondary resonant frequency can be separated. Additionally, because a Wheatstone bridge circuit can be formed in vibration detection, high sensitivity is obtained.

According to the present embodiment, resonant frequency is established to be 60 kHz or more and sensitivity is established to be 12 μV/G or more, and the beam structure and weight (mass) structure are established as will be described hereinafter. Beam width $W_B$ indicated in FIG. 15(a) becomes 0.13 mm. In addition, beam length LB becomes 0.11 mm. Additionally, because a piezoelectric element is formed on the beam, beam thickness $T_B$ is determined by means of the pn junction thereof, and according to the present embodiment is taken to be 13 μm. Moreover, the thickness of the weight (mass) $T_M$ indicated in FIG. 15(b) is determined by means of the thickness of the wafer utilized, and according to the present embodiment is taken to be 0.3 mm. Furthermore, the width of the weight (mass) $W_M$ is determined by means of the thickness of the weight (mass) $T_M$ because, due to the sensitivity relationship, the etching surface orientation for the purpose of forming the weight (mass) is taken to be a (100) surface and the substrate is caused to be tapered by means of etching. According to the present embodiment, a margin is added and this is taken to be 0.7 mm. Accordingly, the length of the weight (mass) $L_M$ must be established so as to primary Rapid Micro Controller and secondary resonance with this width of the weight (mass) $W_M$ as a basis, and according to the present embodiment is taken to be 1.2 mm.

These values may be established as required, taking the resonant frequency to be established as a basis and giving consideration to the fabrication process, the wafer utilized, the relationship between primary and secondary resonant frequencies, or the like.

A detection method to detect vibration of the weight (mass) will be described next.

According to the present embodiment, piezoelectric elements 23a to 23d are disposed as shown in FIG. 15(a). In this manner, disposition is with element 23a and element 23c on the weight (mass) side and element 23b and element 23d on the fixed frame side, and directivity is improved when Wheatstone bridge wiring is performed as shown in FIG. 16. That is to say, in a case whereby the weight (mass) 21 vibrates perpendicularly, the element 23a (element 23c) and the element 23b (element 23d) are subjected to mutually differing stresses, i.e., tensile stress and contraction stress, and sensor sensitivity is improved. Additionally, with respect to torsion vibration (vibration of another axis), the element 23a (element 23c) and the element 23b (element 23d) are subjected to mutually identical stresses, and so the other-axis sensitivity at the Wheatstone bridge of FIG. 16 can be canceled. Furthermore, FIG. 15(b) is a sectional view taken along a line along the beam section of FIG. 15(a). Additionally, the m and n of FIG. 16 are stresses, and V represents the power supply. Furthermore, the number of piezoelectric elements disposed is not exclusively four, and may be for example eight.

In the foregoing manner, a resonant frequency of 60 kHz or more and sensitivity of 12 μV/G or more can be satisfied by designing elements.

Additionally, because the detection frequency of approximately 15 kHz has become considerably high in comparison with several hundred Hz for a conventional acceleration sensor, the beams of the acceleration sensor can be made strong. By means of this, displacement of the weight (mass) 21 in the detection vibration region becomes approximately several μm, and by means of providing this void with the adhesive 18 (thickness approximately 10 μm), the concavity (dotted line portion in the drawing) required in the pedestal for the purpose of installing a conventional acceleration sensor becomes unnecessary. By means of this, the process for the purpose of forming a concavity in the pedestal 12 can be eliminated. Moreover, the void of the pedestal 12 and weight (mass) 21 is the approximately 10 μm thickness of the adhesive 18, which is narrow, and so in a case whereby the weight (mass) 21 vibrates greatly due to a strong shock, the pedestal 12 becomes a vibration stopper for the weight (mass) 21, and destruction of the sensor beams can be prevented.

Additionally, according to the present embodiment a fracture strength of 47,000 to 48,000 G is obtained. This fracture strength becomes a problem in particular in the fabrication process and the transfer process and the like up to installation of the knock sensor, and is a value designed on the basis actual drop testing on concrete and on oak wood, determined with consideration for actual drop shock and resonant frequency of the beams. In a case such as the present of a resonant frequency of 60 kHz, results have been obtained that it is sufficient if there is up to 50,000 G, and so the foregoing value of 47,000 to 48,000 G can be termed substantially sufficient.

Furthermore, if it is desired that this be raised up to 50,000 G, it is acceptable to use a thin film for the beam mounting base portion 50 indicated by dotted lines in FIG. 18(a) and in the sectional view of FIG. 18 (b) taken along line A-A' thereof. When done in this manner, the stress concentration of the portions indicated by circles in the drawing can be alleviated, and beam strength can be increased.

Additionally, an influence effect which will be indicated hereinafter is also demonstrated in a case of the structure indicated in FIGS. 18(a) and 18(b).

That is to say, when the weight (mass) has vibrated, it is preferable that the piezoelectric elements be disposed at the mounting base of the weight (mass) and beams which is one fixing point or the mounting base of the beams and frame which is another fixing point, where beam stress is greatest. However, when the elements become small as in the foregoing embodiment, extremely high precision is demanded in the positional alignment of the mask for the purpose of forming the piezoelectric elements. In a case where mask slippage is caused and the piezoelectric elements are shifted from the mounting base of the weight (mass) and beams or the mounting base of the beams and frame, and piezoelectric elements for formed only in the middle of the weight (mass) or only in the middle of the frame without being attached to the beams, the stress sensitivity of the elements thereof declines to an extreme degree. Accordingly, by means of adopting a structure such as in the foregoing FIGS. 18(a) and 18(b), the piezoelectric elements can be formed without fail proximately to maximum stress even if there is a slight amount of mask slippage, and the conventional problem of an inability to detect much stress in a case whereby mask slippage has occurred can be eliminated.

Additionally, according to a knock sensor indicated in the first or third embodiment, wherein a fixing pedestal 9 such as is indicated in FIG. 19 is fixed to the housing or to the connector by means of welding or gluing or the like by means of a fixing portion indicated by 50, because the structure is such that the perimeter of the fixing pedestal 9 is fixed, resonant frequency drops the most when a sensing element 11 and signal processing circuits 10a and 10b and so on are mounted in a center portion thereof. Consequently, if the center of gravity of the foregoing element and signal processing circuits and so on is made not to be placed on the centerpoint of gravity as seen from the fixing portion of the fixing pedestal, decline in resonant frequency can be suppressed to a certain extent. Additionally, as shown in FIG. 4, in a device of a structure wherein a pedestal (substrate 17) further exists between the fixing pedestal 9 and the sensing element and signal processing circuit and the like, it is acceptable if the combined center of gravity of the pedestal thereof and the sensing element and signal processing circuit and the like does not become the centerpoint of gravity seen from the fixing portion. That is to say, it is acceptable if, at the centerpoint of gravity of the fixing pedestal whereat the perimeter portion thereof is fixed, the apparent centerpoint of gravity of the combined weight of elements mounted thereabove does not overlap.

INDUSTRIAL APPLICABILITY

The present invention, as a vibration detection device to detect a knocking phenomenon in an engine mounted in a vehicle or the like, can be applied as a knock sensor while employing a structure wherein a fabrication process is simple and moreover which can detect even up to a high-frequency region with no drop in sensitivity.

**Claims**

1. A knock sensor comprising:

   a housing (1) installed on an engine;
   a connector portion (2) assembled on said housing (1) to form an isolated interior together with said housing (1), said connector portion (2) including a member (6) electrically connecting between a side of said interior and a side of an exterior of said knock sensor;
   a sensing element (11) disposed inside said isolated interior, comprising a weight part (21, 41), a beam part (22, 42) supporting said weight part (21, 41) and a detector (23a - 23d) detecting a vibration of said weight part (21, 41) responsive to a knocking occurring in said engine, wherein said weight part (21, 41) and said beam part (22, 42) are formed of semiconductor substance; and
a fixing pedestal (9) disposed within said isolated interior to fix said sensing element thereon.

2. A knock sensor according to claim 1, wherein said sensing element (11) comprises a frame part, said weight part (21) set in said frame part and apart from said frame part, and a plurality of beam parts (22) connecting said weight part (21) with said frame part to doubly support said weight part (21) within said frame part, wherein said frame part, said weight part (21) and said beam parts (22) are formed of semiconductor substance.

3. A knock sensor according to claim 2, wherein said frame part of said sensing element (11) has a square configuration, said weight part (21) has an oblong configuration and is disposed in said frame part to be positioned substantially at a center of said frame part, and said beam parts (22) are connected so as to support said weight part (21) from two opposing sides of said frame part and are disposed two by two from one side of said two opposing sides of said frame part.

4. A knock sensor according to any one of claims 1 through 3, wherein said beam part (22) has a geometry selected so as to make a resonant frequency of said sensing element (11) 40 kHz or more to ensure that a maximum detection frequency of said detector (23a - 23d) is approximately 15 kHz.

5. A knock sensor according to claim 4, wherein said fixing pedestal (9) has a resonant frequency of 40 kHz or more.

6. A knock sensor according to claim 5, wherein said resonant frequency of said sensing element (11) is selected to be higher than said resonant frequency of said fixing pedestal (9).

7. A knock sensor according to claim 6, wherein said resonant frequency of said sensing element (11) is selected to be 60 kHz or more.

8. A knock sensor according to claim 4, wherein said geometry of said beam part (22) is selected to ensure that said resonant frequency of said sensing element (11) is 60 kHz or more.

9. A knock sensor according to any one of claims 1 through 8, wherein said detector (23a - 23d) includes a piezoresistance effect element disposed at least on said beam part (22).

10. A knock sensor according to claim 9, wherein said geometry of said beam part (22) is selected so as to make a resonant frequency of said sensing element (11) 40 kHz or more as well as to make a sensitivity of said detector (23a - 23d) 12 μV/G or more.

11. A knock sensor according to claim 10, wherein the length of said beam part (22) is within a range of 0.05 mm to 0.215 mm, preferably from 0.05 mm to 0.1 mm.

12. A knock sensor according to any of claims 1 through 11, wherein said sensing element (11) forms a sensing means fixed to said fixing pedestal (9).

13. A knock sensor according to claim 12, wherein said sensing means is fixed to said fixing pedestal (9) at a surface side opposite to a rear side which faces said connector portion (2) in said isolated interior.

14. A knock sensor according to claim 12 or 13, wherein said sensing means fixed to said pedestal (9) further includes a signal processing element (10).

15. A knock sensor according to claim 14, wherein said signal processing element (10) includes an amplifier circuit (10a) for amplifying an output signal detected by said sensing element (11), a knock signal discriminating circuit (10b) for determining an occurrence of said knocking based on an amplified signal from said amplifier circuit (10a), and a power supply circuit (10c) for supplying a power to said circuits (10a, 10b).

16. A knock sensor according to claim 14 or 15, wherein said pedestal (9) is fixed to an inner wall of said interior at a peripheral portion of said pedestal (9), positions of said sensing element and said signal processing element (10) on said pedestal (9) being shifted from a center of gravity of said pedestal (9).

17. A knock sensor according to claim 16, wherein an apparent centerpoint of gravity formed by said sensing element (11) and said signal processing element (10) is shifted from said center of gravity of said pedestal (9).

18. A knock sensor according to any one of claims 12 through 17, wherein said sensing means (11) has a weight of 1 g or less.

19. A knock sensor according to claim 2 or 3, wherein said weight part (21) is suspended at two opposing sides of said frame part by two pairs of two adjacent beam parts (22), every beam part (22) being provided with at least one piezoresistance effect element (23a - 23d) positioned proximately to one of a connection point between said frame part and said beam part (22) and a connection point between said weight part (21) and said beam part (22).

20. A knock sensor according to claim 19, wherein every beam part (22) is provided with one piezoresistance effect element (23a - 23d), and wherein, in each of said two pairs of said two adjacent beam parts (22), on one of said two adjacent beam parts (22) a piezoresistance effect element (23a - 23d) is disposed at a first side proximate to said connection point between said frame part and said beam part (22) while on the other of said two adjacent beam parts (22) a piezoresistance effect element (23a - 23d) is disposed at a second side proximate to said connection point between said weight part (21) and said beam part (22).

21. A knock sensor according to claim 20, wherein four disposed piezoresistance effect elements (23a - 23d) form a Wheatstone bridge in which piezoresistance effect elements (23a - 23d) disposed on the respective beam parts (22) at the same side of either said first side or said second side are disposed at diagonally opposite sides of said Wheatstone bridge.

22. A knock sensor according to any one of claims 19 through 21, wherein said frame part and said weight part (21) have a thickness thicker than a thickness of said beam parts (22).

23. A knock sensor according to claim 22, wherein a portion of either said frame part or said weight part (21) where said piezoresistance effect element (23a - 23d) is proximately disposed has the same thickness as said beam part (22) continuously connected therefrom.

24. A knock sensor according to claim 22, wherein both marginal portions of said frame part and said weight part (21) where said two pairs of said two adjacent beam parts (22) connects therebetween have the same thickness as said beam parts (22).

25. A knock sensor according to claim 13, wherein said pedestal (9) is fixed to said connector portion (2) at said rear side thereof.

26. A knock sensor according to claim 25, wherein said sensing means (11) is sealed in said interior from a rest of said interior by an can (24) and said fixing pedestal (9).

27. A knock sensor according to claim 26, wherein said rest of said interior is filled with an absorbing material.

28. A knock sensor according to claim 27, wherein said absorbing material (25) is a silicone gel.

29. A knock sensor according to any one of claims 1 through 26, wherein said sensing element (11) has in a perimeter thereof an absorbing member (25) to absorb vibration outside of a detection frequency region which becomes noise, so that vibration which becomes noise is not conveyed to said sensing element.

30. A knock sensor according to any one of claims 1 through 29, wherein said fixing pedestal (9) is composed of a material bondable by welding to said housing (1), and said fixing pedestal (9) and said housing (1) are bonded by welding.

**Patentansprüche**

1. Klopfmelder, umfassend:

   ein auf einem Motor installiertes Gehäuse (1); einen auf dem Gehäuse (1) angeordneten Verbindungsabschnitt (2) zum Bilden eines isolierten Inneren zusammen mit dem Gehäuse (1), wobei der Verbindungsabschnitt (2) ein Glied (6) einschließt, welches eine elektrische Verbindung zwischen einer Seite des Inneren und einer Seite eines Äußeren des Klopfmelders darstellt; ein innerhalb des isolierten Inneren angeordnetes Meßelement (11) mit einem Gewichtsteil (21, 41), einem den Gewichtsteil (21, 41) stützenden Trägerteil (22, 42) und einem Detektor (23a - 23d), welcher eine auf ein bei dem Motor auftretendes Klopfen ansprechende Schwingung des Gewichtsteils (21, 41) nachweist, wobei der Gewichtsteil (21, 41) und der Trägerteil (22, 42) aus einem Halbleiterstoff gebildet werden; und einen Befestigungssockel (9), welcher in dem isolierten Inneren angeordnet wird, um das Meßelement darauf zu befestigen.

2. Klopfmelder nach Anspruch 1, wobei das Meßelement (11) einen Rahmenteil umfaßt, wobei der Gewichtsteil (21) in den Rahmenteil eingesetzt und vom Rahmenteil abgesetzt wird und eine Vielzahl von Trägerteilen (22) den Gewichtsteil (21) mit dem Rahmenteil zur Doppelstützung des Gewichtsteils (21) innerhalb des Rahmenteils verbindet, wobei der Rahmenteil und die Trägerteile (22) aus einem Halbleiterstoff gebildet werden.

3. Klopfmelder nach Anspruch 2, wobei der Rahmenteil des Meßelements (11) einen quadratischen Aufbau aufweist und der Gewichtsteil (21) einen länglichen Aufbau aufweist und innerhalb des Rahmenteils derartig angeordnet wird, daß dieser sich im wesentlichen bei einer Mitte des Rahmenteils befindet, und wobei die Trägerteile (22) verbunden werden, um den Gewichtsteil (21) von zwei gegenüberliegenden Seiten des Rahmenteils zu stützen, und paarweise von einer Seite der zwei gegenüberliegenden Seiten des Rahmenteils angeordnet werden.

4. Klopfmelder nach einem der Ansprüche 1 bis 3, wobei der Trägerteil (22) eine derartig gewählte Geometrie aufweist, daß eine Resonanzfrequenz des Meßelements (11) 40 kHz oder größer gemacht wird, um zu gewährleisten, daß eine maximale Nachweisfrequenz des Detektors (23a - 23d) etwa 15 kHz beträgt.

5. Klopfmelder nach Anspruch 4, wobei der Befestigungssockel (9) eine Resonanzfrequenz von 40 kHz oder mehr aufweist.

6. Klopfmelder nach Anspruch 5, wobei die Resonanzfrequenz des Meßelements (11) höher als die Resonanzfrequenz des Befestigungssockels gewählt wird.

7. Klopfmelder nach Anspruch 6, wobei die Resonanzfrequenz des Meßelements (11) zu 60 kHz oder mehr gewählt wird.

8. Klopfmelder nach Anspruch 4, wobei die Geometrie des Trägerteils (22) derartig gewählt wird, daß gewährleistet ist, daß die Resonanzfrequenz des Meßelements (11) 60 kHz oder mehr beträgt.

9. Klopfmelder nach einem der Ansprüche 1 bis 8, wobei der Detektor (23a - 23d) ein wenigstens auf dem Trägerteil (22) angeordnetes Piezo-Widerstandswirkungselement umfaßt.

10. Klopfmelder nach Anspruch 9, wobei die Geometrie des Trägerteils (22) derartig gewählt wird, daß eine Resonanzfrequenz des Meßelements (11) 40 kHz oder größer gemacht wird und ebenso eine Empfindlichkeit des Detektors (23a - 23d) 12µmV/G oder größer gemacht wird.

11. Klopfmelder nach Anspruch 10, wobei die Länge des Trägerteils (22) innerhalb eines Bereichs von 0,05 bis 0,215 mm liegt, vorzugsweise von 0,05 mm bis 0,1 mm.

12. Klopfmelder nach einem der Ansprüche 1 bis 11, wobei das Meßelement (11) eine an dem Befestigungssockel (9) befestigte Meßeinrichtung bildet.

13. Klopfmelder nach Anspruch 12, wobei die Meßeinrichtung an dem Befestigungssockel (9) an einer Oberflächenseite, welche einer Rückseite gegenüberliegt, welche dem Verbindungsabschnitt (2) zugewandt ist, in dem isolierten Inneren befestigt wird.

14. Klopfmelder nach Anspruch 12 oder 13, wobei die an dem Befestigungssockel (9) befestigte Meßeinrichtung ein Signalverarbeitungselement (10) einschließt.

15. Klopfmelder nach Anspruch 14, wobei das Signalverarbeitungselement (10) eine Verstärkerschaltung (10a) zum Verstärken eines durch das Meßelement (11) nachgewiesenen Ausgangssignals, eine Klopfsignal-Diskriminatorschaltung (10b) zum Bestimmen eines Auftretens eines Klopfens auf der Grundlage eines verstärkten Signals von der Verstärkerschaltung (10a) und eine Energieversorgungsschaltung (10c) zum Zuführen von Energie zu den Schaltungen (10a, 10b) einschließt.

16. Klopfmelder nach Anspruch 14 oder 15, wobei der Befestigungssockel (9) an einer Innenwand des Inneren bei einem Umfangsabschnitt des Befestigungssockels (9) befestigt wird und die Positionen des Meßelements und des Signalverarbeitungselements (10) auf dem Befestigungssockel (9) aus einem Schwerpunkt des Befestigungssockels (9) verschoben werden.

17. Klopfmelder nach Anspruch 16, wobei ein scheinbarer Schwerpunkt, welcher durch das Meßelement (11) und das Signalverarbeitungselement (10) gebildet wird, aus dem Schwerpunkt des Befestigungssockels (9) verschoben wird.

18. Klopfmelder nach einem der Ansprüche 12 bis 17, wobei die Meßeinrichtung (11) ein Gewicht von lg oder weniger aufweist.

19. Klopfmelder nach Anspruch 2 oder 3, wobei der Gewichtsteil (21) an zwei gegenüberliegenden Seiten des Rahmenteils durch zwei Paare von zwei angrenzenden Trägerteilen (22) aufgehängt wird, wobei jeder Trägerteil (22) mit wenigstens einem Piezo-Widerstandswirkungselement (23a - 23d), welches nahe bei einem der Verbindungspunkte zwischen dem Rahmenteil und dem Trägerteil (22) und einem Verbindungspunkt zwischen dem Gewichtsteil (21) und dem Trägerteil (22) angeordnet ist, versehen wird.

20. Klopfmelder nach Anspruch 19, wobei jeder Trägerteil (22) mit einem Piezo-Widerstandswirkungselement (23a - 23d) versehen wird, und wobei bei jedem der zwei Paare der zwei angrenzenden Trägerteile (22) auf einem der zwei angrenzenden Trägerteile (22) ein Piezo-Widerstandswirkungselement (23a - 23d) auf einer ersten Seite nahe bei dem Verbindungspunkt zwischen dem Rahmenteil und dem Trägerteil (22) angeordnet wird, während auf dem anderen der zwei angrenzenden Trägerteile (22) ein Piezo-Widerstandswirkungselement (23a - 23d) an einer zweiten Seite nahe bei dem Verbindungspunkt zwischen dem Gewichtsteil (21) und dem Trägerteil (22) angeordnet wird.

21. Klopfmelder nach Anspruch 20, wobei vier angeordnete Piezo-Widerstandswirkungselemente (23a - 23d) eine Wheatstone-Brücke, bei welcher auf den jeweiligen Trägerteilen (22) an der gleichen Seite von entweder der ersten Seite oder der zweiten Seite angeordnete Piezo-Widerstandswirkungselemente (23a - 23d) an diagonal gegenüberliegenden Seiten der Wheatstone-Brücke angeordnet werden, bilden.

22. Klopfmelder nach einem der Ansprüche 19 bis 21, wobei der Rahmenteil und der Gewichtsteil (21) eine dickere Dicke als eine Dicke der Trägerteile (22) aufweisen.

23. Klopfmelder nach Anspruch 22, wobei ein Abschnitt von entweder dem Trägerteil oder dem Gewichtsteil (21), wo das Piezo-Widerstandswirkungselement (23a - 23d) in der Nähe angeordnet wird, die gleiche Dicke wie der Trägerteil (22), welcher durchgehend davon verbunden wird, aufweist.

24. Klopfmelder nach Anspruch 22, wobei beide Randabschnitte des Rahmenteils und des Gewichtsteils (21), wo die zwei Paare der zwei angrenzenden Trägerteile (22) eine Verbindung dazwischen herstellen, die gleiche Dicke wie die Trägerteile aufweisen.

25. Klopfmelder nach Anspruch 13, wobei der Befestigungssockel (9) an dem Verbindungsabschnitt (2) an der Rückseite davon befestigt wird.

26. Klopfmelder nach Anspruch 25, wobei die Meßeinrichtung (11) im Inneren von einem Rest des Inneren durch eine Hülle (24) und den Befestigungssockel (9) isoliert wird.

27. Klopfmelder nach Anspruch 26, wobei der Rest des Inneren mit einem absorbierenden Material gefüllt wird.

28. Klopfmelder nach Anspruch 27, wobei das absorbierende Material (25) ein Silikongel ist.

29. Ein Klopfmelder nach einem der Ansprüche 1 bis 26, wobei das Meßelement (11) bei einem Umfang davon ein absorbierendes Glied (25) zum Absorbieren einer Schwingung außerhalb eines Nachweisfrequenzbereichs, welche zu einem Rauschen wird, aufweist, so daß eine Schwingung, welche zu einem Rauschen wird, nicht auf das Meßelement übertragen wird.

30. Klopfmelder nach einem der Ansprüche 1 bis 29, wobei der Befestigungssockel (9) aus einem Material, welches durch Schweißen an das Gehäuse (1) gebondet werden kann, zusammengesetzt wird und der Befestigungssockel (9) und das Gehäuse (1) durch Schweißen gebondet werden.

## Revendications

1. Capteur de cliquetis comprenant :

   un boîtier (1) installé sur un moteur,
   une partie de connecteur (2) montée sur ledit boîtier (1) de façon à former un intérieur isolé en association avec ledit boîtier (1), ladite partie de connecteur (2) comprenant un élément (6) assurant la connexion électrique entre le côté dudit intérieur et le côté de l'extérieur dudit capteur de cliquetis,
   un élément sensible (11) disposé à l'intérieur dudit intérieur isolé, comprenant une partie de poids (21, 41), une partie de poutre (22, 42) supportant ladite partie de poids (21, 41) et un détecteur (23a à 23d) détectant une vibration de ladite partie de poids (21, 41) en réponse à un cliquetis se produisant dans ledit moteur, dans lequel ladite partie de poids (21, 41) et ladite partie de poutre (22, 42) sont formées d'une substance semiconductrice, et
   un support de fixation (9) disposé à l'intérieur dudit intérieur isolé afin de fixer ledit élément sensible sur celui-ci.

2. Capteur de cliquetis selon la revendication 1, dans lequel ledit élément sensible (11) comprend une partie de cadre, ladite partie de poids (21) placée dans ladite partie de cadre et à l'écart de ladite partie de cadre, et une pluralité de parties de poutre (22) reliant ladite partie de poids (21) à ladite partie de cadre afin de supporter doublement ladite partie de poids (21) à l'intérieur de ladite partie de cadre, dans lequel ladite partie de cadre, ladite partie de poids (21) et lesdites parties de poutre (22) sont formées d'une substance semiconductrice.

3. Capteur de cliquetis selon la revendication 2, dans lequel ladite partie de cadre dudit élément sensible (11) présente une configuration carrée, ladite partie de poids (21) présente une configuration oblongue et est disposée dans ladite partie de cadre de façon à être positionnée pratiquement au niveau du centre de ladite partie de cadre, et lesdites parties de poutre (22) sont reliées de façon à supporter ladite partie de poids (21) depuis deux côtés opposés de ladite partie de cadre, et sont disposées deux par deux depuis un côté desdits deux côtés opposés de ladite partie de cadre.

4. Capteur de cliquetis selon l'une quelconque des revendications 1 à 3, dans lequel ladite partie de poutre (22) présente une géométrie sélectionnée de façon à rendre la fréquence de résonance dudit élément sensible (11) égale à 40 kHz ou davantage de façon à garantir qu'une fréquence de détection maximum dudit détecteur (23a à 23d) soit approximativement de 15 kHz.

5. Capteur de cliquetis selon la revendication 4, dans lequel ledit support de fixation (9) présente une fréquence de résonance de 40 kHz ou davantage.

6. Capteur de cliquetis selon la revendication 5, dans lequel ladite fréquence de résonance dudit élément sensible (11) est sélectionnée de façon à être plus élevée que ladite fréquence de résonance dudit support de fixation (9).

7. Capteur de cliquetis selon la revendication 6, dans lequel ladite fréquence de résonance dudit élément sensible (11) est sélectionnée de façon à être de 60 kHz ou davantage.

8. Capteur de cliquetis selon la revendication 4, dans lequel ladite géométrie de ladite partie de poutre (22) est sélectionnée de façon à garantir que ladite fréquence de résonance dudit élément sensible (11) soit de 60 kHz ou davantage.

9. Capteur de cliquetis selon l'une quelconque des revendications 1 à 8, dans lequel ledit détecteur (23a à 23d) comprend un élément à effet de piézorésistance disposé au moins sur ladite partie de poutre (22).

10. Capteur de cliquetis selon la revendication 9, dans lequel ladite géométrie de ladite partie de poutre (22) est sélectionnée de façon à rendre la fréquence de résonance dudit élément sensible (11) égale à 40 kHz ou davantage, de même qu'à rendre la sensibilité dudit détecteur (23a à 23d) égale à 12 µV/G ou davantage.

11. Capteur de cliquetis selon la revendication 10, dans lequel la longueur de ladite partie de poutre (22) est comprise dans une plage de 0,05 mm à 0,215 mm, de préférence depuis 0,05 mm jusqu'à 0,1 mm.

12. Capteur de cliquetis selon l'une quelconque des revendications 1 à 11, dans lequel ledit élément sensible (11) forme un moyen de détection fixé audit support de fixation (9).

13. Capteur de cliquetis selon la revendication 12, dans lequel ledit moyen de détection est fixé audit support de fixation (9) au niveau d'un côté de la surface opposée à un côté arrière qui fait face à ladite partie de connecteur (2) dans ledit intérieur isolé.

14. Capteur de cliquetis selon la revendication 12 ou 13, dans lequel ledit moyen de détection fixé audit support (9) comprend en outre un élément de traitement du signal (10).

15. Capteur de cliquetis selon la revendication 14, dans lequel ledit élément de traitement du signal (10) comprend un circuit d'amplification (10a) destiné à amplifier un signal de sortie détecté par ledit élément sensible (11), un circuit de discrimination de signal de cliquetis (10b) destiné à déterminer une occurrence dudit cliquetis sur la base du signal amplifié provenant dudit circuit d'amplification (10a), et un circuit d'alimentation (10c) destiné à alimenter lesdits circuits (10a, 10b).

16. Capteur de cliquetis selon la revendication 14 ou 15, dans lequel ledit support (9) est fixé à une paroi interne dudit intérieur au niveau d'une partie périphérique dudit support (9), les positions dudit élément sensible et dudit élément de traitement du signal (10) sur ledit support (9) étant décalées par rapport au centre de gravité dudit support (9).

17. Capteur de cliquetis selon la revendication 16, dans lequel le point central de gravité apparent formé par ledit élément sensible (11) et ledit élément de traitement du signal (10) est décalé par rapport audit centre de gravité dudit support (9).

18. Capteur de cliquetis selon l'une quelconque des revendications 12 à 17, dans lequel ledit moyen de détection (11) présente un poids de 1 g ou moins.

19. Capteur de cliquetis selon la revendication 2 ou 3, dans lequel ladite partie de poids (21) est suspendue au niveau de deux côtés opposés de ladite partie de cadre à l'aide de deux paires de parties de poutre adjacentes (22), chaque partie de poutre (22) étant munie d'au moins un élément à effet de piézorésistance (23a à 23d) positionné à proximité de l'un parmi un point de liaison entre ladite partie de cadre et ladite partie de poutre (22) et un point de liaison entre ladite partie de poids (21) et ladite partie de poutre (22).

20. Capteur de cliquetis selon la revendication 19, dans lequel chaque partie de poutre (22) est munie d'un élément à effet de piézorésistance (23a à 23d), et dans lequel, dans chacune desdites deux paires desdites deux parties de poutre adjacentes (22), sur l'une desdites deux parties de poutre adjacentes (22) un élément à effet de piézorésistance (23a à 23d) est disposé au niveau d'un premier côté à proximité dudit point de liaison entre ladite partie de cadre et ladite partie de poutre (22), tandis que sur l'autre desdites deux parties de poutre adjacentes (22), un élément à effet de piézorésistance (23a à 23d) est disposé au niveau d'un second côté à proximité dudit point de liaison entre ladite partie de poids (21) et ladite partie de poutre (22).

21. Capteur de cliquetis selon la revendication 20, dans lequel quatre éléments à effet de piézorésistance disposés (23a à 23d) forment un pont de Wheatstone dans lequel les éléments à effet de piézorésistance (23a à 23d) disposés sur les parties de poutre respectives (22) au niveau du même côté de soit ledit premier côté, soit ledit second côté, sont disposés au niveau de côtés opposés en diagonale dudit pont de Wheatstone.

22. Capteur de cliquetis selon l'une quelconque des revendications 19 à 21, dans lequel ladite partie de cadre et ladite partie de poids (21) présentent une épaisseur supérieure à l'épaisseur desdites parties de poutre (22).

23. Capteur de cliquetis selon la revendication 22, dans lequel une partie de soit ladite partie de cadre, soit ladite partie de poids (21) à proximité de laquelle ledit élément à effet de piézorésistance (23a à 23d) est disposé présente la même épaisseur que ladite partie de poutre (22) reliée en continu à celle-ci.

24. Capteur de cliquetis selon la revendication 22, dans lequel les parties marginales à la fois de ladite partie de cadre et de ladite partie de poids (21) où lesdites deux paires desdites deux parties de poutre adjacentes (22) font la liaison entre celles-ci présentent la même épaisseur que lesdites parties de poutre (22).

25. Capteur de cliquetis selon la revendication 13, dans lequel ledit support (9) est fixé à ladite partie de connecteur (2) au niveau dudit côté arrière de celle-ci.

26. Capteur de cliquetis selon la revendication 25, dans lequel ledit moyen de détection (11) est scellé dans ledit intérieur vis-à-vis du reste dudit intérieur à l'aide d'une boîte (24) et dudit support de fixation (9).

27. Capteur de cliquetis selon la revendication 26, dans lequel ledit reste dudit intérieur est rempli d'un matériau absorbant.

28. Capteur de cliquetis selon la revendication 27, dans lequel ledit matériau absorbant (25) est un gel de silicone.

29. Capteur de cliquetis selon l'une quelconque des revendications 1 à 26, dans lequel ledit élément sensible (11) comporte dans le périmètre de celui-ci un élément absorbant (25) destiné à absorber les vibrations hors d'une région de fréquences de détection qui deviennent du bruit, de façon que les vibrations qui deviennent du bruit ne soient pas transmises audit élément sensible.

30. Capteur de cliquetis selon l'une quelconque des revendications 1 à 29, dans lequel ledit support de fixation (9) est composé d'un matériau pouvant être lié par soudage audit boîtier (1), et ledit support de fixation (9) et ledit boîtier (1) sont liés par soudage.

# FIG. 1

# FIG. 2

# FIG. 3(a)

# FIG. 3(b)

# FIG. 4

# FIG. 5

# FIG. 6(a)

# FIG. 6(b)

# FIG. 7(a)

# FIG. 7(b)

FIG. 8(a)

CANTILEVER BEAM

FIG. 8(b)

DOUBLY SUPPORTED BEAM
(BEAM LENGTH: 0.11 mm)

# FIG. 9(a)

DOUBLY SUPPORTED BEAM
(L= 0.05 mm)

FORMATIVE REGION

(3.4 - 9 μm)

BEAM THICKNESS [μm]

# FIG. 9(b)

DOUBLY SUPPORTED BEAM
(L= 0.10 mm)

FORMATIVE REGION

(6.6 - 12.7 μm)

BEAM THICKNESS [μm]

# FIG. 10(a)

DOUBLY SUPPORTED BEAM
(L= 0.20 mm)

FORMATIVE REGION
(13.1 - 18 μm)

BEAM THICKNESS [μm]

# FIG. 10(b)

DOUBLY SUPPORTED BEAM
(L= 0.25 mm)

FORMATIVE REGION
(16.5 - 20 μm)

BEAM THICKNESS [μm]

23

# FIG. 11(a)

DOUBLY SUPPORTED BEAM
(L= 0.30 mm)

# FIG. 11(b)

DOUBLY SUPPORTED BEAM
(L= 0.35 mm)

# FIG. 12

BEAM LENGTH VS BEAM THICKNESS
DOUBLY SUPPORTED BEAM

# FIG. 13

BEAM LENGTH VS BEAM THICKNESS
DOUBLY SUPPORTED BEAM  (W= 1.2 × 0.7)

# FIG. 14(a)

BEAM LENGTH VS BEAM THICKNESS
DOUBLY SUPPORTED BEAM  (W= 1.7 × 1)

# FIG. 14(b)

BEAM LENGTH VS BEAM THICKNESS
DOUBLY SUPPORTED BEAM  (W= 1.8 × 1)

# FIG. 15(a)

# FIG. 15(b)

# FIG. 16

# FIG. 17

# FIG. 18(a)

# FIG. 18(b)

EP 0 671 612 B1

# FIG. 19

50

10a

10b

11

9

# FIG. 22

30

⌀ 19

⌀ 16.5

M

D

M

1mm

⌀18.2

31

# FIG. 20

### STEM THICKNESS VS RESONANT FREQUENCY

# FIG. 21

### LOAD VS RESONANT FREQUENCY
0.1-0.2-0.4-1-2-4.6

□ 2.8mm △ 3.5mm